# EUROPÄISCHE PATENTSCHRIFT

(11) **EP 1 105 300 B1**
(45) Veröffentlichungstag und Bekanntmachung des Hinweises auf die Patenterteilung: **20.11.2002**
(21) Anmeldenummer: 99952357.4
(22) Anmeldetag: 11.08.1999
(51) Int. Cl.: B60M 1/24

(54) **FAHRDRAHTHALTER, INSBESONDERE BOGENFAHRDRAHTHALTER, ZUM AUFHÄNGEN VON FAHRDRÄHTEN UND SEILEN VON OBERLEITUNGSANLAGEN**
CONTACT WIRE HOLDER, ESPECIALLY AN ARCHED CONTACT WIRE HOLDER, FOR SUSPENDING CONTACT WIRES AND CABLES IN CATENARY SYSTEMS
SUPPORT DE FILS DE CONTACT, NOTAMMENT SUPPORT DE FILS DE CONTACT COURBES, POUR SUSPENDRE DES FILS DE CONTACT ET DES CABLES DE SYSTEMES DE CATENAIRES

(30) Priorität: 19.08.1998 DE 19837649
(43) Veröffentlichungstag der Anmeldung: 13.06.2001
(73) Patentinhaber: SIEMENS AKTIENGESELLSCHAFT, 80333 München (DE)
(72) Erfinder: LERAY, Philippe, D-67061 Ludwigshafen (DE)
(86) Internationale Anmeldenummer: DE9902504
(87) Internationale Veröffentlichungsnummer: WO00010831

(56) Entgegenhaltungen:
- DE-C- 737 828
- GB-A- 190 917 326
- NL-C- 28 745

## Beschreibung

Die Erfindung betrifft einen Fahrdrahthalter, insbesondere Bogenfahrdrahthalter, zum Aufhängen von Fahrdrähten und Seilen von Oberleitungsanlagen, entsprechend dem Oberbegriff des Patentanspruches 1.

Bei der Verlegung der Fahrleitungen von Oberleitungsanlagen besteht an sich das Problem, die Fahrdrahtklemme, welche den Fahrdraht fixiert, an Querfeldern so fest zu machen, daß der Fahrdraht stets in einem definierten Abstand zur Gleisachse verläuft. Besonders problematisch ist die Festlegung des Fahrdrahtes in Kurvenzügen, weil dort die Fahrdrahthalter einer erhöhten Kippbelastung ausgesetzt sind und dazu tendieren, den Fahrdraht aus der Ideallinie zur Gleisachse herauszuziehen.

Fahrdrahthalter bekannter Bauart, wie sie beispielsweise in den Siemens-Katalogen FM 1978, Kapitel 6/5 bis 6/10, oder FM 1995, Kapitel 7/13, gezeigt sind, bestehen aus einem Gießharz-isolator, in dem einerseits eine Anschlußarmatur und andererseits ein Ringnutbolzen als Anschlußteil für eine Fahrdrahtklemme eingegossen sind. An den beiden Enden der Anschlußarmatur befinden sich Befestigungslaschen bzw. Befestigungsösen. Die eine ist mit einer Klemmplatte für eine erste Fixierung an einem Richtseil versehen, an der anderen ist ein verstellbarer Seitenarm angelenkt. Das freie Ende des Seitenarmes enthält eine weitere Befestigungslasche mit Klemmplatte und Zahnscheibe für eine zweite Fixierung am Richtseil. Seitenarm und Klemmplatte werden auch als Einzelteil angeboten.

Um den Fahrdraht relativ zur Gleisachse festzulegen, wird der Fahrdrahthalter am Richtseil entlang verschoben. Der Seitenarm wird gegebenenfalls nach unten verstellt, um so den Kurvenzug des Fahrdrahts ausgleichen zu können. Der vertikale Abstand zum Richtseil ist nicht einstellbar.

Mehrfachfahrdrahthalter, z. B. Kurven-Fahrdrahthalter für zwei Fahrdrähte, wie sie in FM 1978, Kapitel 6/6, dargestellt sind, sind ähnlich aufgebaut; der eine Grundkörper an dem der Seitenarm angelenkt ist weist jedoch eine anders gestaltete Anschlußarmatur auf, da er nicht mit dem Richtseil verbunden wird.

Das Bereitstellen unterschiedlicher Fahrdrahthalter auch für unterschiedliche Fahrdrahtdurchmesser, die jeweils eine andere Gestaltung des Ringnutbolzens erfordern, erfordert deshalb eine vergleichsweise hohe Lagerhaltung. Des weiteren entstehen bei einem Austausch der Isolatoren vergleichsweise hohe Montage- und Justierkosten, da bei einem Defekt eines Isolators der Fahrdrahthalter insgesamt ausgewechselt und der neue Fahrdrahthalter neu justiert werden muß.

Der im Anspruch 1 angegebenen Erfindung liegt die Aufgabe zugrunde, demgegenüber eine Verbesserung zu erzielen, insbesondere eine Vereinfachung in Herstellung und Justage bei Fahrdrahthaltern an sich und im Besonderen bei Mehrfachfahrdrahthaltern zu erreichen.

Der erfindungsgemäß vorgeschlagene Fahrdrahthalter ermöglicht durch den symmetrischen Aufbau einerseits der Anschlußarmatur und andererseits der beiden Seitenarme eine Modulbauweise, die die Lagerhaltung für unterschiedliche Ausführungen, d.h. Ein- oder Mehrfachbogenfahrdrahthalter, reduziert. Der Fahrdrahthalter wird stets aus einem Grundkörper mit Anschlußarmatur und zwei gleichen Seitenarmen zusammengestellt. Ein Doppelbogenfahrdrahthalter, wie er z. B. im Weichenbereich eingesetzt wird, wird aus zwei gleichen Grundkörpern und zwei gleichen Seitenarmen zusammengestellt.

Ein weiterer wesentlicher Vorteil ist, daß der vertikale Abstand des Fahrdrahthalters zum Richtteil und auch der Kippwinkel der Seitenarme in mehreren Stufen eingestellt werden kann. Der Fahrdrahthalter ist sowohl in der Geraden als auch in der Kurve gleichermaßen gut einsetzbar. Dadurch, daß der Isolator des Grundkörpers mit der Anschlußarmatur für die Seitenarme verschraubt ist, kann der Isolator vor Ort ausgewechselt werden, ohne daß die Justierung gegenüber dem Richtseil neu eingestellt zu werden braucht.

Anhand der Zeichnung werden mehrere Ausführungsformen eines Fahrdrahthalters näher beschrieben. Es zeigen:
- FIG 1: einen Bogenfahrdrahthalter, komplett montiert in einer Seitenansicht,
- FIG 2: den Grundkörper des Bogenfahrdrahthalters in schaubildlicher Ansicht,
- FIG 3: den kompletten Bogenfahrdrahthalter in perspektivischer Ansicht,
- FIG 4: einen Zweifach-Bogenfahrdrahthalter in perspektivischer Ansicht.

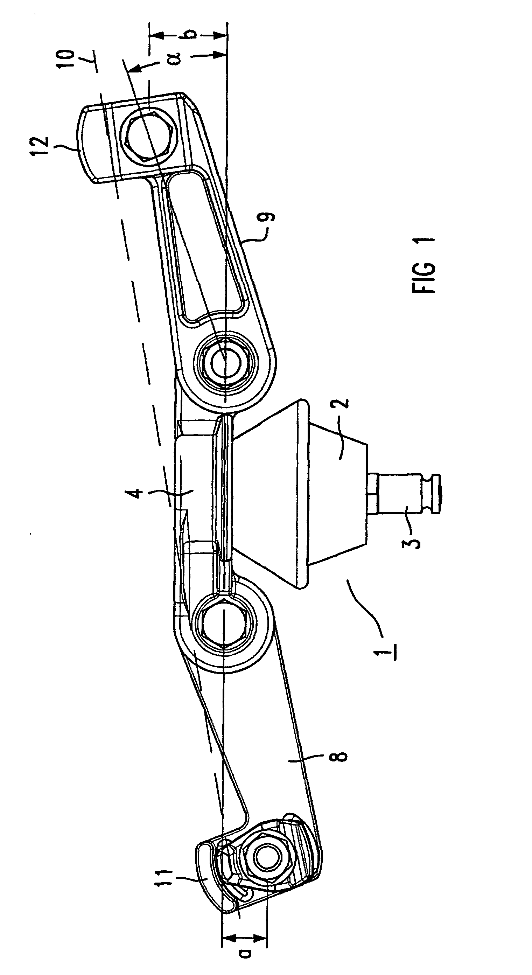

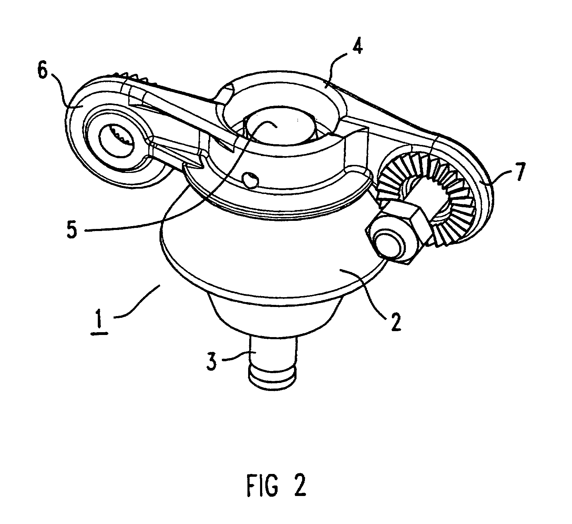

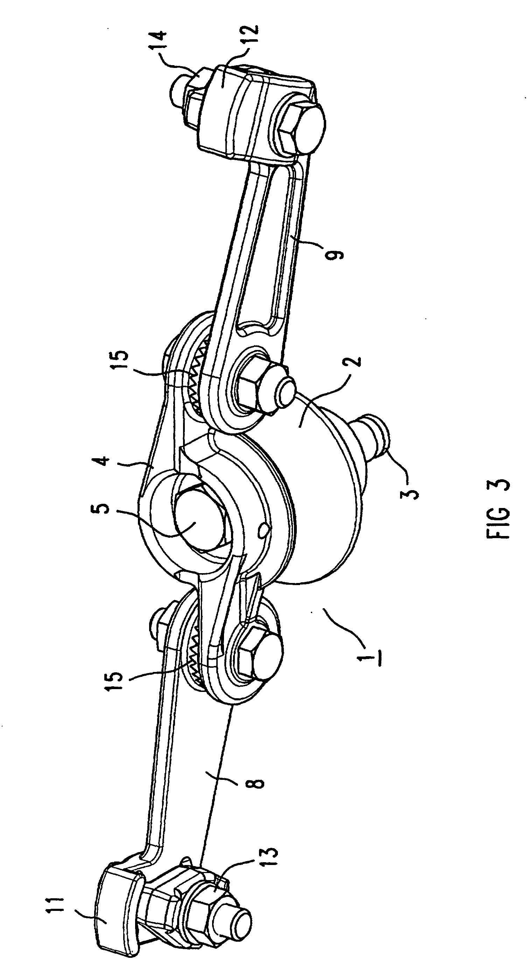

Der in FIG 1 in Seitenansicht dargestellte Bogenfahrdrahthalter umfaßt einen Grundkörper 1, der in der Fachsprache auch als Zwischenhalter bezeichnet wird. Er beinhaltet einen Isolator 2 aus beispielsweise Gießharz, in dem ein Ringnutbolzen 3 zur Aufnahme einer nicht dargestellten Fahrdrahtklemme eingegossen ist. Der Grundkörper 1 enthält ferner eine Anschlußarmatur 4, die mit dem Isolator 2 verschraubt ist. Die Verschraubung ist mit der Position 5 angedeutet (FIG 2, 3 und 4). Durch die leicht lösbare Verbindung von Anschlußarmatur 4 und Isolator 2 kann bei Beschädigung des Isolators oder bei Anwendung eines anders gestalteten Fahrdrahtklemmen-Anschlußteils dieses leicht ausgewechselt werden, ohne daß die Anschlußarmatur selbst ersetzt zu werden braucht, vor allen Dingen, ohne daß eine Neujustierung des gesamten Bogenfahrdrahtes durchgeführt zu werden braucht. Ein Austausch des Isolators 2 kann demnach vor Ort erfolgen.

Die Anschlußarmatur ist symmetrisch aufgebaut und enthält beidseitig Laschen 6, 7, an denen Seitenarme 8, 9 angelenkt sind. Die Seitenarme 8, 9 dienen, wie später noch näher erläutert, zur Justierung des Bogenfahrdrahthalters in Bezug auf ein mit gestrichelten Linien angedeutetes Richtseil 10, mit dem der Fahrdraht stets auf der Ideallinie zur Gleisachse gehalten wird. Das Richtseil 10 ist in bekannter Weise in Klemmplatten 11 und 12 durch eine entsprechende Verschraubung 13,14 mit Konterung fixierbar.

Die Seitenarme 8, 9 sind gleich ausgebildet, d.h. sie können wechselweise auf der rechten oder linken Seite des Grundkörpers 1 verwendet werden.

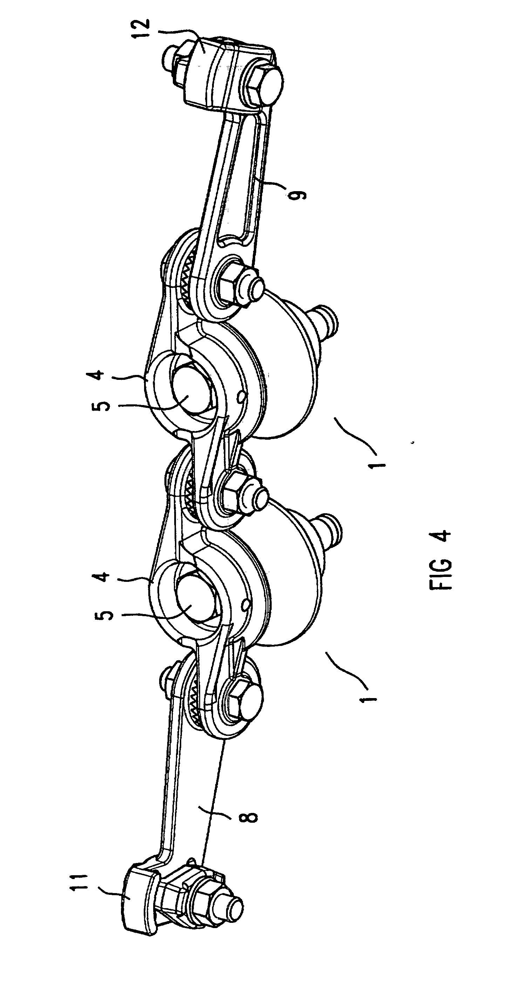

Ein weiterer wesentlicher Vorzug der Modulbauweise ergibt sich in Betrachtung der FIG 4, die einen Zweifach-Bogenfahrdrahthalter in perspektivischer Darstellung zeigt. Bei der Zusammenstellung eines Zweifach-Bogenfahrdrahthalters, wie er z. B. im Bereich von Weichen eingesetzt wird, gelangen zwei gleiche Grundkörper 1 und auch zwei gleiche Seitenarme 8, 9 zur Anwendung. Für einen Zwei- oder Dreifach-Bogenfahrdrahthalter sind demnach keine neu zu gestaltenden Bauteile erforderlich, wodurch sich die Lagerhaltung für die Bauteile stark vereinfachen läßt.

Ein wesentlicher Vorzug gegenüber bekannten Bogenfahrdrahthaltern ist außerdem, daß durch den symmetrischen Aufbau der Anschlußarmatur und der beidseitig vorhandenen Seitenarme 8, 9 sich der gesamte Fahrdrahthalter auch in der Vertikalen einstellen läßt. Aus der Darstellung in FIG 2 ist entnehmbar, daß der Seitenarm 8 in der dargestellten Position um das Maß a gegenüber einer horizontalen Lage nach unten geschwenkt ist und der Seitenarm 9 um das Maß b nach oben gekippt ist. Das Einstellen der Neigungslage der Seitenarme (Kippwinkel α) erfolgt mittels einer Zahnscheibenrasterung 15, die sowohl an der Anschlußarmatur 4 als auch an den Seitenarmen 8, 9 vorhanden ist. Die Seitenarme 8, 9 können so zur Kompensation des Kippmoments, welches vom Richtseil auf den Bogenfahrdrahthalter wirkt, optimal eingestellt werden. Das gleiche gilt für die Ausrichtung des Fahrdrahtes auf eine konstante Höhe in bezug auf die Gleisebene, was besonders bei mehreren nebeneinanderliegenden, von gemeinsamen Querfeldern (Richtseilen) getragenen bzw. abgespannten Fahrdrähten von Vorteil ist.

## Patentansprüche

1. Fahrdrahthalter, insbesondere Bogenfahrdrahthalter, zum Aufhängen von Fahrdrähten und Seilen von Oberleitungsanlagen, enthaltend mindestens einen Grundkörper (1) mit einem Isolator (2), an dem einerseits ein Anschlußteil (3) für eine Fahrdrahtklemme und andererseits eine symmetrisch aufgebaute Anschlußarmatur (4) mit beidseitig gleich ausgebildeten Aufnahmelaschen (6, 7) für die Aufnahme von Seitenarmen (8, 9) gehaltert sind, wobei die Anschlußarmatur (4) Mittel (8, 9, 11, 12, 13, 14, 15) zur Justierung und Befestigung des Fahrdrahthalters an einem Richtseil (10) enthält, **dadurch gekennzeichnet, daß** der Isolator (2) durch eine leicht lösbare Verbindung, vorzugsweise durch eine Schraubverbindung (5), mit der Anschlußarmatur (4) des Grundkörpers (1) verbunden ist, daß die Seitenarme (8, 9) gleich ausgebildet und beidseitig des Grundkörpers (1) mittels eines Schwenkgelenks an der Anschlußarmatur (4) angelenkt sind, und daß das Schwenkgelenk so ausgebildet ist, daß die Seitenarme stufenweise derart einstellbar sind, daß sowohl der vertikale Abstand (a, b) des Anschlußteils zum Richtseil als auch der Kippwinkel (α) zum Ausgleich des vom Richtseil auf den Grundkörper (1) wirkenden Kippmoments veränderbar ist.

## Claims

1. A contact wire holder, in particular an arched contact wire holder, for suspending contact wires and cables in catenary systems, containing at least one base body (1) having an insulator (2) on which, on the one hand, a connection part (3) for a contact wire clamp and, on the other, a symmetrically constructed connection fitting (4) having receiving lugs (6, 7) of an identical construction at both sides for receiving side arms (8, 9) are held, the connection fitting (4) having means (8, 9, 11, 12, 13, 14, 15) for aligning and securing the contact wire holder on a cross-span adjuster (10), **characterised in that** the insulator (2) is connected to the connection fitting (4) of the base body (1) by a readily releasable connection, preferably by a screw connection (5), **in that** the side arms (8, 9) are of an identical construction and are coupled to the connection fitting (4) at both sides of the base body (1) by means of a pivot joint, and **in that** the pivot joint is constructed such that the side arms are adjustable in steps, so that both the vertical spacing (a, b) between the connection part and the cross-span adjuster and the tilting angle (α) may be altered for the purpose of compensating the tilting moment acting on the base body (1) from the cross-span adjuster.

## Revendications

1. Support de fils de contact, notamment support de fils de contact courbes, pour suspendre des fils de contact et des câbles de systèmes de caténaires, comprenant au moins une embase (1) ayant un isolateur (2), à laquelle sont fixées, d'une part, une pièce (3) de connexion pour une pince serre-fil de suspension et, d'autre part, une armature (4) de connexion symétrique ayant des éclisses (6, 7) de réception constituées de manière identique de part et d'autre et destinées à recevoir des bras (8, 9) latéraux, l'armature (4) de connexion comprenant des moyens (8, 9, 11, 12, 13, 14, 15) d'ajustement et de fixation du support de fils de contact à un transversal (10), **caractérisé en ce que** l'isolateur (2) est relié par un assemblage facilement amovible, de préférence par un assemblage (5) vissé, à l'armature (4) de connexion de l'embase (1), **en ce que** les bras (8, 9) latéraux sont constitués de manière identique et sont articulés de part et d'autre de l'embase (1) au moyen d'une articulation basculante à l'armature (4) de connexion et **en ce que** l'articulation basculante est constituée de façon à ce que les bras latéraux puissent être réglés par paliers, de sorte que tant la distance (a, b) verticale de la partie de connexion au transversal que l'angle (α) de basculement peuvent être modifiés pour compenser le couple de basculement appliqué par le transversal à l'embase (1).
